# EUROPEAN PATENT APPLICATION

(11) **EP 4 506 559 A1**
(43) Date of publication of application: **12.02.2025**
(21) Application number: 23382825.0
(22) Date of filing: 07.08.2023
(51) Int. Cl.: F03D 1/06, F03D 80/30

(54) **BLADE SEGMENT, WIND TURBINE AND METHOD FOR MANUFACTURING A BLADE SEGMENT**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

The invention relates to a blade segment (10) for a wind turbine (100), the blade segment (10) comprising at least one attachment device (20) for attaching the blade segment (10) in a transverse plane (yz) of the blade segment (10) to another blade segment (10) and/or a rotor hub (12) for a wind turbine (100), a down conductor (30), wherein the down conductor (30) is at least partially embedded into a longitudinal element (40) of the blade segment (10), wherein the longitudinal element (40) is arranged along a longitudinal axis (x) of the blade segment (10), and at least a first connection terminal (50), wherein the at least one first connection terminal (50) is at least partially embedded into the longitudinal element (40) and electrically connected to a first end of the down conductor (30). Furthermore, the invention relates to a wind turbine (100) with a blade segment (10) and a method for manufacturing a blade segment (10).

## Description

The invention relates to a blade segment for a wind turbine, a wind turbine with a blade segment and a method for manufacturing a blade segment.

Known wind turbines comprise different lightning protection systems with down conductors. In an exemplary modular blade of a wind turbine, the down conductors in the carbon cap need to be connected to a fairing element that transmits the lightning current from an outboard section of the blade to an inboard section of the blade. Furthermore, the down conductor needs to be electrically connected in between blade segments and/or a blade segment and the rotor hub of the wind turbine. As such, it is required to prepare the electrical connections before the assembly of the joint conductive elements. The actual preparation of current processes comprise a lot of manual steps in tight working spaces and therefore lack uniformity, quality and are very hard to perform. Furthermore, in the current processes, the down conductors are prone to being damaged and/or infused with resin. Thereby, the need for invasive repairs arises and/or the wind turbine blades vary in quality. This repair for example requires the manual crimping and soldering of a new cable and thereby is very time absorbing as well as labour intensive.

Accordingly, it is an object of the invention to provide a blade segment for a wind turbine, a wind turbine with a blade segment and a method for manufacturing a blade segment, that overcome at least some of the aforementioned disadvantages in a convenient and cost-efficient way.

This object is solved by the subject matter of the claims. In particular, the object is solved by a blade segment for a wind turbine according to claim 1, a wind turbine according to claim 10 and a method for manufacturing a blade segment according to claim 11. Further details of the invention unfold from the other claims as well as the description and the drawings. Thereby, the features and details described in connection with the blade segment, with the wind turbine and with the method for manufacturing a blade segment of the invention may be applied in connection with each other so that regarding the disclosure of the individual aspects of the invention it is or can be referred to one another.

According to a first aspect of the invention, the above mentioned object is solved by a blade segment for a wind turbine, the blade segment comprising at least one attachment device for attaching the blade segment in a transverse plane of the blade segment to another blade segment and/or a rotor hub for a wind turbine, a down conductor, wherein the down conductor is at least partially embedded into a longitudinal element of the blade segment, wherein the longitudinal element is arranged along a longitudinal axis of the blade segment, and at least a first connection terminal, wherein the at least one first connection terminal is at least partially embedded into the longitudinal element and electrically connected to a first end of the down conductor.

The blade segment according to the invention is preferably to be understood as a module blade segment, a blade tip segment and/or a blade root segment. The attachment device is designed to attach two blade segments to each other or two attachment devices of two blade segments to each other. Furthermore, the attachment device is preferably designed to attach a blade segment to a rotor hub of a wind turbine. The blade segments are attached to each other in the transverse plane, which is preferably aligned perpendicular or at least substantially perpendicular to the longitudinal axis of the blade segments. The wording "X or substantially X" should be understood in the context of the invention as a possible, minor deviation, for example due to manufacturing tolerances, material and/or process properties, without changing the underlying, intended function of the feature.

The attachment device is preferably designed as an attachment plate, which preferably comprises separate attachment means or incorporated attachment means, for example bolts, screws and/or pins.

The down conductor of the inventive blade segment is preferably designed to connect a lightning protection system of the wind turbine through the blade construction to the rotor hub and/or the tower of the wind turbine. The down conductor is is at least partially, preferably fully, embedded into a longitudinal element. The longitudinal element is preferably precasted for the manufacturing of the blade segment, which is described in detail in a following paragraph of the description. Preferably, the down connector is embedded inside a polymer matrix of the longitudinal element during the manufacturing of the longitudinal element and/or the shell of the blade segment.

The key aspect of the invention is to provide a defined, solid and/or repeatable connection means for electrically connecting the down conductors of two blade segments or a blade segment and the rotor hub of a wind turbine. Therefore, the inventive blade segment comprises at least a first connection terminal. The at least one first connection terminal is at least partially, preferably fully, embedded into the longitudinal element and electrically connected to a first end of the down conductor. The longitudinal element is preferably, especially exclusively, made of a polymer matrix and resin. The longitudinal element is preferably made from layers of fiber-reinforced material. The embedding of the connection terminal at least partially, preferably fully, into the longitudinal element is preferably to be understood as an at least partially, preferably fully, embedding of the connection terminal inside a matrix, especially a polymer matrix, and/or layers of the longitudinal element. The electrical connection of the at least one first connection terminal and the first end of the down conductor preferably comprises the crimping, clamping, pressing, fixing and/or screwing of the first end of the down conductor to and/or inside the at least one first connection terminal. The longitudinal element is arranged along the longitudinal axis of the blade segment. The longitudinal element is preferably fixed, laminated and/or attached to the blade segment and/or the shell of the blade segment. The at least one first connection terminal is preferably fixed to a permanent position inside the longitudinal element and/or the blade segment. The at least one first connection terminal comprises at least one connection means for electrically connecting the at least one first connection terminal to a terminal of another blade segment and/or a rotor hub.

The down conductor is preferably designed as a braided cable, an at least partially flexible conductor and/or an at least partially isolated conductor.

In an especially advantages design, the blade segment comprises only a single connection terminal, which is arranged in a frontal and/or transverse plane of the blade segment. The single connection terminal is electrically connected to the down conductor inside the longitudinal element of the blade segment. Preferably, the blade segment comprises attachment devices on at least one or at each longitudinal end of the blade segment. Two blade segments of this kind are advantageously connected by their attachment devices on opposite ends. The down conductor of a first blade segment is electrically connected to the connection terminal of the second blade segment. Thereby, multiple of these blade segments are easily connectable with each other.

The blade segment of the invention according to these features is especially advantageous because it provides a defined, solid and/or repeatable connection means for electrically connecting the down conductors of two blade segments or a blade segment and the rotor hub of a wind turbine.

The blade segment of the invention may further comprise at least a second connection terminal, wherein the at least one second connection terminal is at least partially embedded into the longitudinal element and electrically connected to a second end of the down conductor, wherein in the first end and the second end of the down conductor are opposing ends of the down conductor. The at least one second connection terminal enables the inventive blade segment to be electrically connected to two blade segments or to one blade segment and the rotor hub of the wind turbine. For example, a blade segment according to these features is attachable in between two blade segments and/or a blade segment and the rotor hub. The blade segment preferably comprises at least a second attachment device in order to be attached to two blade segments and/or a blade segment and the rotor hub. The second attachment device is preferably arranged on the opposite side of the blade segment of the first attachment device. The blade segment of the invention according to these features is especially advantageous because it provides a defined, solid and/or repeatable connection means for electrically connecting the down conductors of at least two, preferably three or more blade segments in line or two blade segments and the rotor hub of a wind turbine.

The blade segment of the invention may further comprise that the at least one first connection terminal and/or the at least one second connection terminal are arranged at least partially inside a transverse face of the longitudinal element, especially wherein the transverse face is arranged inside the transverse plane of the blade segment. The at least one first connection terminal and/or the at least one second connection terminal are especially advantageous, when they are arranged at least partially inside a transverse face of the longitudinal element. The transverse face of the longitudinal element is preferably defined to be at one of the ends or at each of the ends of the longitudinal element along the longitudinal axis of the longitudinal element. The transverse face is preferably oriented angled, especially perpendicular or at least substantially perpendicular, to the longitudinal axis of the longitudinal element. Thereby, the at least one first connection terminal and/or the at least one second connection terminal are especially suitably arranged in order to connect them to a connection terminal of another blade segment and/or a rotor hub. The transverse face being arranged inside the transverse plane of the blade segment is preferably to be understood as the transverse face being in line or being parallel to the transverse plane of the blade segment. Thereby, the inventive blade segment provides an advantageous attachment plane for structurally and electrically connecting the blade segment to another blade segment and/or the rotor hub of the wind turbine. The blade segment of the invention according to these features is especially advantageous because it provides a defined, solid and/or repeatable connection means for electrically connecting the down conductors of two blade segments or a blade segment and the rotor hub of a wind turbine.

The blade segment of the invention may further comprise that the at least one attachment device is electrically connected to the at least one first connection terminal and/or the at least one second connection terminal. The at least one attachment device is preferably designed as an attachment plate. The electrical connection from one connection terminal of a first blade segment to another connection terminal of a second blade segment is designed directly and/or indirectly. An indirect connection of two connection terminals, for example, comprises the electrical connection of the at least one attachment device to the at least one first connection terminal and/or the at least one second connection terminal. The respective connection terminal is for example electrically connected to the connection terminal of the other blade segment via the respective attachment devices. This feature is especially advantageous since the attachment devices are being grounded by the down conductor automatically as well. Thereby, the groundings of the attachment devices are designed to be attached to the electrical terminals directly and/or indirectly, for example via the down conductor. The blade segment of the invention according to these features is especially advantageous because it provides a defined, solid and/or repeatable connection means for electrically connecting the down conductors of two blade segments or a blade segment and the rotor hub of a wind turbine.

The blade segment of the invention may further comprise that the at least one first connection terminal and/or the at least one second connection terminal at least partially are designed as a solid block of material, preferably of copper or copper alloy. In the manufacturing process of the blade segment, the blade segment preferably is cut along and/or inside the transverse plane in order to produce a defined assembling and/or connection plane for jointing two blade segments and/or a blade segment and the rotor hub. The at least one first connection terminal and/or the at least one second connection terminal at least partially being designed as a solid block of material provides an advantageous amount of material for the manufacturing and cutting process of the blade segment as well as the electrically connection to the down conductor.

Additionally, or alternatively the at least one first connection terminal and/or the at least one second connection terminal are drilled and/or tapped to provide a connection means for connecting the terminal to another terminal. The at least one first connection terminal and/or the at least one second connection terminal at least partially being designed as a solid block of material provides an advantageous amount of material for the respective connection means.

The at least one first connection terminal and/or the at least one second connection terminal being made from copper or copper alloy allows for an advantageous connection of the down connectors of the blade segments.

The blade segment of the invention according to these features is especially advantageous because it provides a defined, solid and/or repeatable connection means for electrically connecting the down conductors of two blade segments or a blade segment and the rotor hub of a wind turbine.

The blade segment of the invention may further comprise that the at least one first connection terminal and/or the at least one second connection terminal comprise at least one connection means for connecting the respective connection terminal to a connection terminal of another blade segment or rotor hub. The connection means are designed as the aforementioned drilled and/or tapped holes in the respective connection terminals, as cables attached to the respective connection terminals, as pins and/or holes on and/or in the respective connection terminals, as connectors and/or sockets at the respective connection terminals and/or as touching faces at the respective connection terminals. The electrical connection between two connection terminals is designed directly or indirectly, as described before. The connection terminals are designed at least partially to be protruding and/or inserting from the transverse plane of the attachment device and/or the blade segment. The blade segment of the invention according to these features is especially advantageous because it provides a defined, solid and/or repeatable connection means for electrically connecting the down conductors of two blade segments or a blade segment and the rotor hub of a wind turbine.

The blade segment of the invention may further comprise that the at least one connection means are, especially along the longitudinal axis, indented, inserted and/or protruding connection means. Preferably, the connection means are holes, especially drilled holes, inside the connection terminal along the longitudinal axis. The aforementioned manufacturing process as well as the cutting process of the blade segment are advantageously combinable with drilling the connection means along the longitudinal axis of the blade segment. Thereby, the connection means are producible as well as reachable in an advantageous way, even when the blade segment is already fully manufactured. The blade segment of the invention according to these features is especially advantageous because it provides a defined, solid and/or repeatable connection means for electrically connecting the down conductors of two blade segments or a blade segment and the rotor hub of a wind turbine.

The blade segment of the invention may further comprise that the electrical connection of the at least one first connection terminal to the first end of the down conductor is fully embedded into the longitudinal element. The down conductor as well as the connection of the down conductor to the at least one first connection terminal and/or the at least one second connection terminal is preferably fully embedded into the longitudinal element. The longitudinal element is preferably precasted for the manufacturing of the blade segment. Preferably, the down connector and the respective terminal or terminals are embedded inside a polymer matrix of the longitudinal element during the manufacturing of the longitudinal element and/or the shell of the blade segment. Thereby, the position of the terminal or terminals as well as the connection of the down conductor to the terminal or terminals are secured by the embedding. The blade segment of the invention according to these features is especially advantageous because it provides a defined, solid and/or repeatable connection means for electrically connecting the down conductors of two blade segments or a blade segment and the rotor hub of a wind turbine.

The blade segment of the invention may further comprise that the longitudinal element is designed as a structural element of the blade segment, especially a structural element of the leading edge and/or the trailing edge of the blade segment and/or a structural element extending from the leading edge to the trailing edge. The longitudinal element advantageously provides a structural function to the blade segment and thereby increases stability and/or reduces weight of the blade segment. The longitudinal element preferably comprises structural means inside the longitudinal element in order to increase stiffness and/or strength of the longitudinal element. The longitudinal element preferably is at least partially hollow. The blade segment of the invention according to these features is especially advantageous because it provides a defined, solid and/or repeatable connection means for electrically connecting the down conductors of two blade segments or a blade segment and the rotor hub of a wind turbine.

According to a second aspect of the invention, the initially stated object is solved by a wind turbine comprising at least one blade segment, wherein the at least one blade segment is designed according to the first aspect. With the wind turbine described, all the advantages already outlined with respect to the blade segment according to the first aspect of the invention are obtained.

According to a third aspect of the invention, the initially stated object is solved by a method for manufacturing a blade segment with at least one connection terminal. The method comprises:
- premanufacturing a longitudinal element for the blade segment, wherein a down conductor of the blade segment is at least partially embedded into a longitudinal element of the blade segment, wherein the at least one first connection terminal is at least partially embedded into the longitudinal element and electrically connected to a first end of the down conductor,
- arranging the premanufactured longitudinal element along a longitudinal axis of the blade segment,
- manufacturing the blade segment at least partially around the premanufactured longitudinal element.

The method steps described above and below can, unless explicitly stated otherwise, be carried out individually, together, once, several times, in parallel and/or consecutively in any order. A designation as, for example, "first process step" and "second process step" does not require any chronological order and/or prioritisation. A preferred order of the process steps is that the process steps are carried out in the order listed.

The premanufacturing of the longitudinal element is preferably understood as a precasting of the longitudinal element with the down conductor and the at least one first connection terminal being at least partially embedded into the longitudinal element.

The arranging the premanufactured longitudinal element along a longitudinal axis of the blade segment preferably comprises a step of fixing the longitudinal element to the blade segment.

The manufacturing of the blade segment preferably comprises a casting of a blade shell of the blade segment.

The method preferably comprises a step of arranging the at least one first connection terminal near an end along the longitudinal axis of the longitudinal element and/or cutting the premanufactured longitudinal element, the at least one first connection terminal and/or the blade segment to produce a defined attachment plane, especially inside the transverse plane.

The method preferably comprises a step of electrically connecting at least one attachment device of the wind turbine blade segment to the at least one first connection terminal and/or the down conductor. The electrical connection is designed to be direct or indirect. Thereby, the blade segment is preferably designed to be attached to another blade segment and/or a rotor hub via the attachment device, wherein the attachment device is advantageously grounded via the down connector and/or the at least one first connection terminal.

With the method described, all the advantages already outlined with respect to the blade segment according to the first aspect of the invention and/or the wind turbine according to the second aspect of the invention are obtained.

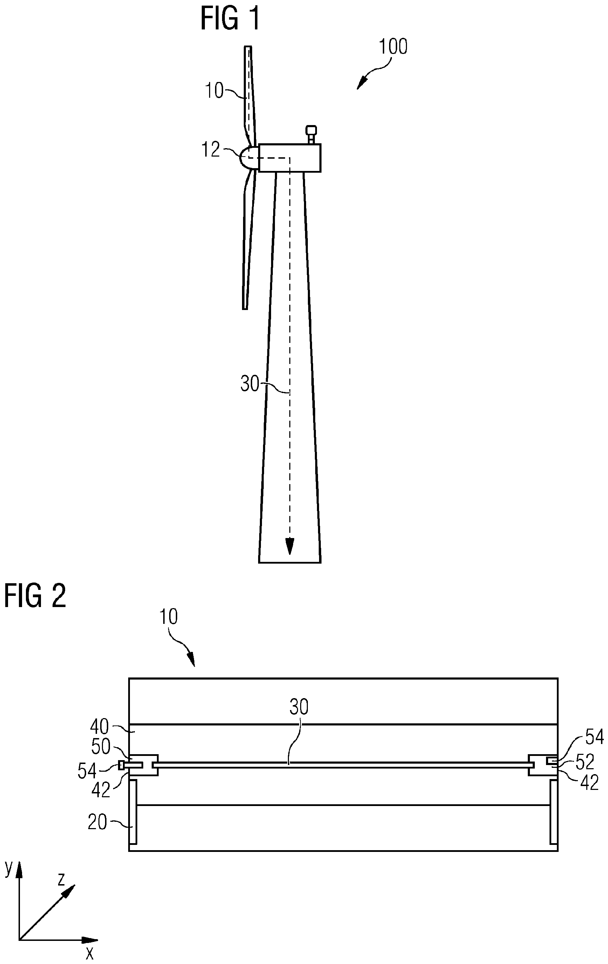

Further advantages, features and details of the invention unfold from the following description, in which by reference to drawings FIGS. 1 to 3, embodiments of the present invention are described in detail. Thereby, the features from the claims as well as the features mentioned in the description can be essential for the invention as taken alone or in an arbitrary combination. In the drawings, there is schematically shown:
FIG. 1 a schematic illustration of a wind turbine with a down conductor, a rotor hub and blade segments;
FIG. 2 a schematic illustration of a blade segment sliced along the longitudinal axis of the blade segment;
FIG. 3 a schematic illustration of a blade segment sliced along the transverse plane of the blade segment; and
FIG. 4 a schematic illustration of a method for manufacturing a blade segment with a connection terminal.

Same objects in FIGS. 1 to 4 are labeled with the same reference number. The objects are shown in a schematic manner, and their specific dimensions are exemplary and may be enlarged for ease of reference.

FIGURE 1 shows a schematic illustration of a wind turbine 100 with a down conductor 30, a rotor hub 12 and blade segments 10. The down conductor 30 is electrically connected through the blade segments 10 and the rotor hub 12.

FIGURE 2 shows a schematic illustration of a blade segment 10 sliced along the longitudinal axis x of the blade segment 10. The blade segment 10 comprises an attachment device 20 for attaching the blade segment 10 in a transverse plane yz of the blade segment 10 to another blade segment 10 and/or a rotor hub 12, a down conductor 30, wherein the down conductor 30 is fully embedded into a longitudinal element 40 of the blade segment 10, wherein the longitudinal element 40 is arranged along a longitudinal axis x of the blade segment 10, and a first connection terminal 50. The first connection terminal 50 is fully embedded into the longitudinal element 40 and electrically connected to a first end of the down conductor 30. The blade segment 10 comprises a second connection terminal 52, wherein the second connection terminal 52 is fully embedded into the longitudinal element 40 and electrically connected to a second end of the down conductor 30, wherein in the first end and the second end of the down conductor 30 are opposing ends of the down conductor 30. The first connection terminal 50 and the second connection terminal 52 are arranged inside a respective transverse face 42 of the longitudinal element 40, wherein the transverse faces 42 are arranged inside the transverse planes yz of the blade segment 10 and the respective attachment devices 20. The first connection terminal 50 and the second connection terminal 52 are designed as a solid block of material. The first connection terminal 50 and the second connection terminal 52 comprise connection means 54 for connecting the respective connection terminal 50, 52 to a connection terminal 50, 52 of another blade segment 10 or rotor hub 12 (not shown). The electrical connection of the first connection terminal 50 to the first end of the down conductor 30 as well as the electrical connection of the second connection terminal 52 to the second end of the down conductor 30 are fully embedded into the longitudinal element 40.

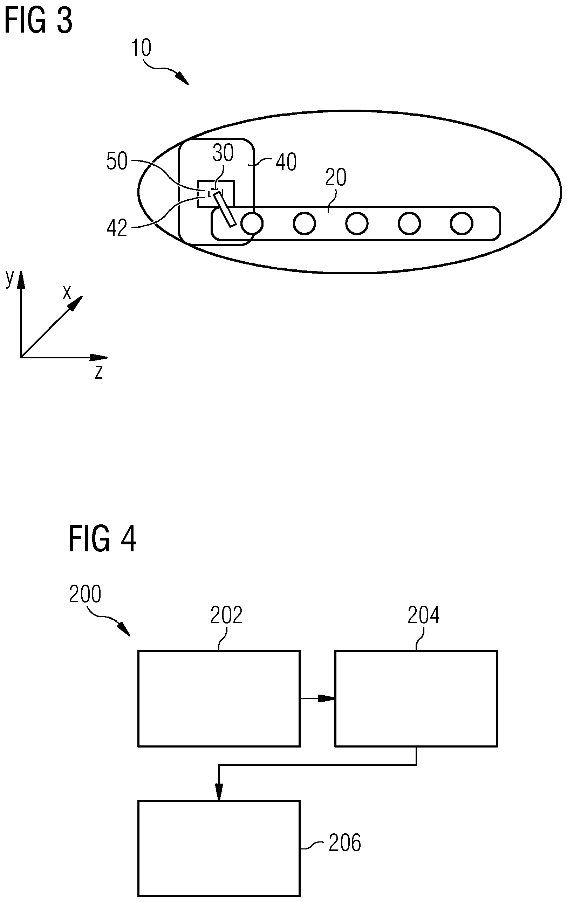

FIGURE 3 shows a schematic illustration of a blade segment 10 sliced along the transverse plane yz of the blade segment 10.

The blade segment 10 comprises an attachment device 20 for attaching the blade segment 10 in a transverse plane yz of the blade segment 10 to another blade segment 10 and/or a rotor hub 12, a down conductor 30, wherein the down conductor 30 is fully embedded into a longitudinal element 40 of the blade segment 10, wherein the longitudinal element 40 is arranged along a longitudinal axis x of the blade segment 10, and a first connection terminal 50. The first connection terminal 50 is fully embedded into the longitudinal element 40 and electrically connected to a first end of the down conductor 30. The attachment device 20 is electrically connected to the first connection terminal 50. The longitudinal element 40 is designed as a structural element of the blade segment 10.

FIGURE 4 shows a schematic illustration of a method 200 for manufacturing a blade segment 10 with a connection terminal 50. The method 200 comprises a first step of premanufacturing 202 a longitudinal element 40 for the blade segment 10, wherein a down conductor 30 of the blade segment 10 is embedded into a longitudinal element 40 of the blade segment 10, wherein the first connection terminal 50 is embedded into the longitudinal element 40 and electrically connected to a first end of the down conductor 30. The method 200 comprises another step of arranging 204 the premanufactured longitudinal element 40 along a longitudinal axis x of the blade segment 10. The method 200 comprises another step of manufacturing 206 the blade segment 10 around the premanufactured longitudinal element 40.

## Claims

1. Blade segment (10) for a wind turbine (100), the blade segment (10) comprising at least one attachment device (20) for attaching the blade segment (10) in a transverse plane (yz) of the blade segment (10) to another blade segment (10) and/or a rotor hub (12) for a wind turbine (100), a down conductor (30), wherein the down conductor (30) is at least partially embedded into a longitudinal element (40) of the blade segment (10), wherein the longitudinal element (40) is arranged along a longitudinal axis (x) of the blade segment (10), and at least a first connection terminal (50), wherein the at least one first connection terminal (50) is at least partially embedded into the longitudinal element (40) and electrically connected to a first end of the down conductor (30).

2. Blade segment (10) for a wind turbine (100) according to claim 1,
**characterized in**
**that** the blade segment (10) comprises at least a second connection terminal (52), wherein the at least one second connection terminal (52) is at least partially embedded into the longitudinal element (40) and electrically connected to a second end of the down conductor (30), wherein in the first end and the second end of the down conductor (30) are opposing ends of the down conductor (30).

3. Blade segment (10) for a wind turbine (100) according to any of the previous claims,
**characterized in**
**that** the at least one first connection terminal (50) and/or the at least one second connection terminal (52) are arranged at least partially inside a transverse face (42) of the longitudinal element (40), especially wherein the transverse face (42) is arranged inside the transverse plane (yz) of the blade segment (10).

4. Blade segment (10) for a wind turbine (100) according to any of the previous claims,
**characterized in**
**that** the at least one attachment device (20) is electrically connected to the at least one first connection terminal (50) and/or the at least one second connection terminal (52).

5. Blade segment (10) for a wind turbine (100) according to any of the previous claims,
**characterized in**
**that** the at least one first connection terminal (50) and/or the at least one second connection terminal (52) at least partially are designed as a solid block of material, preferably of copper or copper alloy.

6. Blade segment (10) for a wind turbine (100) according to any of the previous claims,
**characterized in**
**that** the at least one first connection terminal (50) and/or the at least one second connection terminal (52) comprise at least one connection means (54) for connecting the respective connection terminal (50, 52) to a connection terminal (50, 52) of another blade segment (10) or rotor hub (12).

7. Blade segment (10) for a wind turbine (100) according to claim 6,
**characterized in**
**that** the at least one connection means (54) are, especially along the longitudinal axis (x), indented, inserted and/or protruding connection means (54).

8. Blade segment (10) for a wind turbine (100) according to any of the previous claims,
**characterized in**
**that** the electrical connection of the at least one first connection terminal (50) to the first end of the down conductor (30) is fully embedded into the longitudinal element (40).

9. Blade segment (10) for a wind turbine (100) according to any of the previous claims,
**characterized in**
**that** the longitudinal element (40) is designed as a structural element of the blade segment (10), especially a structural element of the leading edge and/or the trailing edge of the blade segment (10).

10. Wind turbine (100) comprising at least one blade segment (10),
**characterized in**
**that** the at least one blade segment (10) is designed according to any of the previous claims.

11. Method (200) for manufacturing a blade segment (10) with at least one connection terminal (50), the method comprising:
- premanufacturing (202) a longitudinal element (40) for the blade segment (10), wherein a down conductor (30) of the blade segment (10) is at least partially embedded into a longitudinal element (40) of the blade segment (10), wherein the at least one first connection terminal (50) is at least partially embedded into the longitudinal element (40) and electrically connected to a first end of the down conductor (30),
- arranging (204) the premanufactured longitudinal element (40) along a longitudinal axis (x) of the blade segment (10),
- manufacturing (206) the blade segment (10) at least partially around the premanufactured longitudinal element (40).
